# EUROPEAN PATENT SPECIFICATION

(11) **EP 4 186 800 B1**
(45) Date of publication and mention of the grant of the patent: **28.01.2026**
(21) Application number: 21425059.9
(22) Date of filing: 26.11.2021
(51) Int. Cl.: B64F 1/30, G06Q 10/04, G06Q 10/06

(54) **ADAPTIVE AIRCRAFT BOARDING SYSTEM**
ADAPTIVES EINSTIEGSSYSTEM FÜR FLUGZEUGE
SYSTÈME ADAPTATIF D'EMBARQUEMENT D'AÉRONEF

(43) Date of publication of application: 31.05.2023
(73) Proprietor: Rockwell Collins, Inc., Cedar Rapids, IA 52498 (US)
(72) Inventor: MIGNOGNA, Alessandro, 00185 Rome (IT)
(74) Representative: Dehns

(56) References cited:
- EP-A1- 2 608 127
- WO-A1-2018/223201
- US-A1- 2015 025 920
- US-A1- 2021 116 261
- US-B1- 10 776 593

## Description

The present invention relates to a boarding system and a computer-implemented method for boarding a plurality of passengers onto an aircraft.

The spread of the Coronavirus Disease 2019 (COVID-19) pandemic to locations worldwide has had a serious impact on nearly all industries, particularly the aviation industry.

The lack of an efficient treatment or vaccine to fight the disease and limit its catastrophic effects forced mostly all countries around the globe to react with lock-down and quarantine measures, closing frontiers and strongly limiting people movement. This had a dramatic impact on the aviation business, resulting in a drastic breakdown of flight traffic. The aviation industry showed its lack of preparation to efficiently and safely respond to a pandemic event by being unable to implement suitable precautionary and protective systems for passengers, resulting in a strong reduction of trust from passengers that now strongly limits desire to travel.

The European Union Aviation Safety Agency (EASA), the European Centre for Disease Prevention and Control (ECDC) and later on the U.S. Federal Aviation Administration (FAA) and other aviation organizations all around the world, have now developed guidelines to serve as an aviation health safety protocol and to provide a source of best practice on how airport operators, airplane operators conducting commercial and non-commercial passenger transport operations and national aviation authorities can ensure the health and safety of passengers, as well as the staff and crew who serve them, by maintaining safe and secure operations whilst minimizing the risk of virus transmission.

Generally, scientific studies and articles confirm that the distance that large respiratory droplets travel is 1.5 meters for normal speech, and up to 2 meters when coughing. For this reason, airplane operators, airport operators and service providers are recommended to encourage physical distancing of 1.5 meters wherever this is operationally feasible. Where allowed, airplane operators should ensure, to the extent possible, maximal physical distancing among passengers.

US 2021/116261 A1 discloses a system configured to use occupancy measurement of public transport in order to identify one or more routes which it may provide/recommend to a user.

WO 2018/223201 A1 discloses a system, method and interactive multimedia carpet intended for assisting, ordering and controlling passenger boarding of aircraft at airports.

At least the preferred embodiments of the present invention aim to address congestion point and physical distancing issues in the aircraft boarding process.

According to a first aspect of the invention there is provided a boarding system for boarding a plurality of passengers onto an aircraft acording to claim 1, each passenger having an assigned seat on the aircraft, the boarding system comprising: a scheduling system configured to control access of each of the plurality of passengers to a boarding gate in accordance with a boarding schedule; and a tracking system comprising a plurality of monitoring devices, the tracking system being configured to monitor behaviour of each of the plurality of passengers when moving along a respective boarding path, each boarding path extending between the boarding gate and the assigned seat of the respective passenger; wherein the scheduling system is configured to: identify a congestion point based on data received from the tracking system; identify one or more passengers from amongst the plurality of passengers that have not yet been granted access to the boarding gate and that have an expected boarding path that does not pass through the congestion point; and in response, adjust the boarding schedule to prioritise granting of access to the identified one or more passengers.

According to a second aspect of the invention there is provided a computer-implemented method of boarding a plurality of passengers onto an aircraft according to claim 9, each passenger having an assigned seat on the aircraft, the method comprising: controlling access of each of the plurality of passengers to a boarding gate in accordance with a boarding schedule using a scheduling system; monitoring behaviour of each of the plurality of passengers when moving along a respective boarding path using a tracking system comprising a plurality of monitoring devices, each boarding path extending between the boarding gate and the assigned seat of the respective passenger; and modifying the boarding schedule in response to identification of a congestion point along an expected boarding path of a passenger based on data received from the tracking system.

The boarding system and computer-implemented method provide for the automatic and continuous regulation of a boarding schedule based on the movements of passengers along their respective boarding path (from boarding gate to assigned seat), in order to avoid/mitigate the formation of queues and congestion points and thus improve the speed and smoothness of the boarding process. Moreover, minimising the formation of queues and congestion points improves the physical distancing of passengers during the aircraft boarding process.

The expected boarding path of a passenger is the route from the boarding gate to the assigned seat of the passenger the system expects the passenger to take during boarding.

Initially (e.g. prior to the boarding process), the expected boarding path of each passenger may be the fastest and/or shortest route from the boarding gate to the assigned seat of the respective passenger.

The expected boarding path may be estimated/determined by the boarding system. The expected boarding path may be predicted by the boarding system.

The boarding path of a passenger is the route from the boarding gate to the assigned seat of the passenger that the passenger actually follows during boarding, e.g. the actual boarding path that the passenger moves along.

The (actual) boarding path of a passenger may correspond to the expected boarding path, or the behaviour of the passenger may result in the (actual) boarding path taken deviating from the expected boarding path. For example, the expected boarding path of a passenger may extend from the boarding gate to the assigned seat of the passenger via a front entrance of the aircraft. However, the passenger may (for any reason, e.g. human error) actually follow a boarding path that extends from the boarding gate to the assigned seat of the passenger via a rear entrance of the aircraft.

The scheduling system may be configured to: identify one or more passengers that have an expected boarding path that passes through the congestion point; and in response, propose an alternative boarding path for each of the identified one or more passengers and notify the identified one or more passengers of their proposed alternative boarding path.

For example, if it is identified that the expected boarding path of a passenger would take them into/through a congestion point, but that the passenger can reach their assigned seat via an alternative route/boarding path that avoids the congestion point, then the system will propose this alternative boarding path to the passenger.

The one or more passengers may have already been granted access to the boarding gate, or may not have yet been granted access to the boarding gate.

Each alternative boarding path may be determined so that it does not pass through the congestion point.

The scheduling system may be configured to estimate and/or predict an expected boarding path of each of the plurality of passengers. The scheduling system may be configured to maintain (e.g. store) an expected boarding path of each of the plurality of passengers in a memory of the scheduling system.

The scheduling system may be configured to determine an expected boarding path of each of the plurality of passengers based on at least one of a layout of the aircraft, a layout of the boarding gate and a layout of the boarding bridge.

The scheduling system may be configured to determine an expected boarding path of each of the plurality of passengers based on an estimated distance to move from the boarding gate to the assigned seat of the respective passenger.

The scheduling system may be configured to determine an expected boarding path of each of the plurality of passengers based on an estimated time to move from the boarding gate to the assigned seat of the respective passenger.

The scheduling system may be configured to notify the identified one or more passengers of their proposed alternative boarding path by communicating the proposed alternative boarding path to a mobile device of each of the identified one or more passengers.

The scheduling system may be configured to notify the identified one or more passengers of their proposed alternative boarding path by displaying instructions based on the proposed alternative boarding path on one or more monitors.

The one or more monitors may be located at the boarding gate (e.g. boarding gate monitors) and/or between the boarding gate and the aircraft (e.g. on the boarding bridge).

The scheduling system may be configured to notify the identified one or more passengers of their proposed alternative boarding path by broadcasting instructions based on the proposed alternative boarding path using a public-address system.

According to the invention the scheduling system is configured to: identify one or more passengers from amongst the plurality of passengers that have not yet been granted access to the boarding gate and that have an expected boarding path that does not pass through the congestion point; and in response, adjust the boarding schedule to prioritise granting of access to the identified one or more passengers.

A congestion point may form at any location along a boarding path for any number of reasons. However, because each passenger has a unique boarding path, a congestion point may not necessarily affect the boarding of all passengers. For example, if one or more passengers get stuck in a queue on one specific aircraft aisle (formed perhaps from a passenger having difficulty stowing luggage in overhead storage bins), passengers that need to access seats that are after the start of the queue on the aircraft aisle will only contribute to the queue. However, passengers which have seats before the queue on the aircraft aisle, or have seats on a different aircraft aisle, will not be affected by the queue and so can continue to board. Therefore, those passengers who are yet to begin boarding but who will not be affected by the congestion point can be prioritised by moving them up the boarding schedule, i.e. allowing those passengers to board before other passengers who would be required to pass the congestion point, thereby allowing boarding to continue without exacerbating the queue.

The scheduling system may be configured to: identify one or more passengers from amongst the plurality of passengers that have not yet been granted access to the boarding gate and that have an expected boarding path that passes through the congestion point; and in response, adjust the boarding schedule to deprioritise the identified one or more passengers and/or suspend granting of access to the identified one or more passengers for a period of time.

Where it is determined a congestion point affects the boarding of one or more passengers yet to begin boarding, these passengers can be moved down the boarding schedule and their access to the boarding gate may be suspended for a period of time to reduce the chance of them contributing to the congestion point. In some cases, it may be identified that all passengers that have not yet been granted access to the boarding gate have expected boarding paths that pass through the congestion point (e.g. if a queue has developed in the boarding bridge) and, in response, the scheduling system may be configured to adjust the boarding schedule to suspend granting of access to all passengers for a period of time. Whilst total suspension of boarding may not reduce overall boarding time, this improves the smoothness of boarding for the passengers yet to begin boarding as they can wait in the more comfortable pre-boarding areas rather than being stuck in queues/congestion points along their boarding path. Moreover, minimising the formation of queues and congestion points improves the physical distancing of passengers during the aircraft boarding process.

The scheduling system may be configured to, prior to adjusting the boarding schedule to deprioritise the identified one or more passengers and/or suspend granting of access to the identified one or more passengers for a period of time, determine that there is not an alternative boarding path for each of the identified one or more passengers that avoids the congestion point. Advantageously, the scheduling system can confirm that there is no other alternative route to their assigned seat for a passenger with an expected boarding path that passes through a congestion point, before suspending granting of access of the passenger.

The scheduling system may be configured to identify a cause of the congestion point based on the data received from the tracking system; wherein the scheduling system is configured to estimate a time for congestion at the congestion point to be resolved based on the cause of the congestion point; and wherein the period of time is based on the estimated time for the congestion to be resolved.

The scheduling system may be configured to estimate a time for congestion at the congestion point to be resolved based on a size of the congestion.

The scheduling system may be configured to estimate a time for congestion at the congestion point to be resolved based on a location of the congestion.

By identifying the cause, size and/or location of the congestion point, the system can make a prediction on how long it may take the congestion point to be resolved using at least one of these parameters. Advantageously, by predicting the time at which the congestion point will be resolved, the system may resume granting of passenger access to the boarding gate based on the knowledge that the newly admitted passengers will not reach the congestion/queue along their expected boarding path before it has dispersed.

The scheduling system may be configured to determine an activity being performed by one or more passengers associated with the congestion point; and wherein the cause of the congestion point is determined based on the determined activity.

For example, where the plurality of monitoring devices comprises one or more cameras, the video of the congestion point may be analysed to determine the activity being performed by one or more passengers that is causing the congestion. Determined activities may include positioning luggage in an overhead bin, taking off a coat or jacket, slow walking (perhaps as a result of being on crutches or as a result of young children), stopping to pick up a dropped item of clothing/luggage, waiting for other passengers, etc. The determined activity can thus inform the cause of the congestion point which in turn can inform the estimation of the time for congestion at the congestion point to be resolved (e.g. a congestion caused by a passenger picking up a dropped item of clothing/luggage will be resolved once the item has been picked up).

The scheduling system may be configured to control passenger access to the boarding gate by displaying at least part of the boarding schedule on one or more airport monitors.

At least part of the boarding schedule, in the form of passenger notifications and information, can be displayed on airport monitors (e.g. boarding gate monitors) to, for example, inform passengers that have not yet been granted access to the boarding gate when they should approach the boarding gate to be granted access. The displayed part of the boarding schedule may include an assigned seat number of one or more passengers and, preferably, a time that the passenger with the specified seat number will be granted access through the boarding gate. Alternatively, the displayed part of the boarding schedule may include an assigned seat number of one or more passengers and a recommended status of the passenger of the specified seat number, such as "Boarding Now" or "Get Ready to Board". By providing passengers with specific, continuously updated information about when they should approach the boarding gate, the system can avoid confusion during the boarding process and prevent congestion/crowds from developing before/at the boarding gate and/or on a boarding path.

The scheduling system may be configured to control passenger access to the boarding gate by communicating a personalised boarding schedule to a mobile device of one or more of the plurality of passengers. The personalised boarding schedule may be derived from the boarding schedule of the scheduling system and may correspond to the respective passenger.

The scheduling system may be configured to communicate the personalised boarding schedule to the mobile device via SMS messaging. Optionally, the scheduling system may be configured to communicate with, or be integrated with, a third party mobile application (e.g. an application of an airline provider). As such, the scheduling system can directly communicate at least part of the boarding schedule, in the form of the personalised boarding schedules, to passengers as required. The personalised boarding schedule may comprise information including an assigned seat number of one or more passengers and/or an estimated time that the one or more passengers with the specified seat number will be granted access to the boarding gate. The personalised boarding schedule communication may be configured to generate a notification (e.g. an alert, such as an audible alert, a visual alert or a vibration) to notify the passenger of a change of recommended status of the passenger. For example, the notification may indicate whether a passenger should be "Boarding Now", or should "Get Ready to Board". The notification may indicate that there has been a change of the estimated time of boarding. By providing passengers with specific, continuously updated information about when they should approach the boarding gate, the scheduling system can avoid confusion during the boarding process and prevent congestion/crowds from developing before/at the boarding gate and/or on a boarding path.

The scheduling system may be configured to: predict a future congestion point along an expected boarding path of a passenger based on data received from the tracking system; and modify the boarding schedule in response to identification of the future congestion point.

The scheduling system may optionally comprise one or more predictive algorithms which may be able to process data received from the tracking system and may make predictions based on the received data.

In one example, a passenger may be identified based on the data received by the tracking system as moving slowly (e.g. slower than a walking speed threshold) and/or unexpectedly (e.g. deviating from their expected boarding path). The walking speed threshold may be a predetermined threshold and/or based on walking speeds of other passengers (e.g. the identified passenger may be on crutches or have a large number of bags). This may not necessarily lead to a congestion point (e.g. if there is space for other passengers to pass by the identified passenger), but the system may recognise that a congestion/queue will occur when the slow passenger reaches a specific location along their boarding path, such as narrow part of a boarding bridge or the aisles of the aircraft. As such, the system may predict that a future congestion point will develop, and modify the boarding schedule in response to identification of the future congestion point.

The scheduling system may be configured to identify one or more passengers that have an expected boarding path that passes through the future congestion point; and in response, propose an alternative boarding path for each of the identified one or more passengers and notify the identified one or more passengers of their proposed alternative boarding path.

In another example, the number of items and/or the types of hand-baggage carried by a passenger may be identified based on the data received from the tracking system. The scheduling system may predict how long the passenger will take to be seated once they arrive at their seat based on the number of items of hand-baggage and/or their types. The scheduling system may predict that a future congestion point will develop based on the number of items and/or the types of hand-baggage carried by the passenger, and modify the boarding schedule in response to identification of the future congestion point.

The scheduling system may modify the boarding schedule in response to identification of a future congestion point in the same, or similar, way as it may modify the boarding schedule in response to identification of a (existing) congestion point. For example, by prioritising or de-prioritising a passenger based on their respective expected boarding path and/or alternative boarding path and the location of the future congestion point.

The scheduling system may be configured to modify the boarding schedule based on other data in addition to the data received from the tracking system.

The scheduling system may be configured to modify the boarding schedule based on passenger information received from the airline provider.

The system may be configured to make an initial prediction on the behaviour of a passenger and a likelihood of the passenger causing a congestion point (e.g. a single frequent flyer passenger may be less likely to cause congestion during the boarding process, whereas a family with young children may be more likely to cause congestion during the boarding process).

The system may be configured to make initial modifications to the boarding schedule based on the initial predictions of the behaviour of a passenger. For example, the system may be configured to modify the boarding schedule to suspend granting of access to one or more passengers for a period of time so that other passengers with a high risk of congestion behaviour are provided with plenty of time to travel along their boarding path.

The scheduling system may be configured to estimate a time for congestion at the congestion point to be resolved based on passenger information received from the airline provider. For example, the scheduling system may be configured to estimate a time for congestion at the congestion point to be resolved based on historical travel history of one or more passengers associated with the congestion point (e.g. an inexperienced flyer passenger may be slower than a frequent flyer passenger at stowing luggage).

The boarding system may comprise an airport tracking system comprising a plurality of airport monitoring devices, the scheduling system being configured to receive data from the airport monitoring system.

The system may be configured to modify the boarding schedule based on a behaviour of each of the plurality of passengers when in the airport (e.g. prior to boarding). For example, the airport tracking system may identify that one or more passengers who are scheduled to be shortly granted access to the boarding gate are far away from the boarding gate, or are stuck in a congestion point and/or an amenity of the airport. In response, the scheduling system may be configured to modify the boarding schedule to adjust the boarding schedule to suspend granting of access to the identified one or more passengers for a period of time. The period of time may be based on the estimated time for the one or more passengers to reach the boarding gate.

The boarding system may comprise an aircraft storage monitoring system comprising a plurality of aircraft storage monitoring devices, the scheduling system being configured to receive data from the aircraft storage monitoring system.

The scheduling system may be configured to modify the boarding schedule in response to data from the aircraft storage monitoring system, e.g. in response to an availability of space for overhead storage of luggage. If there is no available space for a passenger to store their luggage near to their assigned seat, this can often cause congestion/queues as this passenger obstructs other passengers in their search for somewhere to store their luggage.

The system may be configured to identify that there is no available storage space for a passenger to store luggage near to their assigned seat and, in response, propose an alternative boarding path for the passenger that passes through a location of available storage space within the aircraft.

The system may be configured to notify the passenger (e.g. via a monitor or mobile device) of a location of available storage space and/or of the proposed alternative boarding path.

The location of available storage space may be identified using a seat number and, preferably, may be where passengers are already seated.

The scheduling system may be configured to modify the boarding schedule based on the alternative boarding paths of the identified one or more passengers. For example, the boarding schedule may be modified to provide a passenger with a proposed alternative boarding path extra space and time to move along the alternative boarding path (e.g. and to store their luggage). Thus, causation of any future congestion points by proposed alternative boarding paths can be avoided.

The plurality of monitoring devices may comprise a plurality of cameras.

The plurality of cameras may comprise one or more video cameras.

Preferably, the tracking system is a video-based camera system that is able to track behaviour of each of the plurality of passengers when moving along their respective boarding path. Video cameras provide a number of benefits to the system, notably the possibility to use facial recognition software for specific identification of passengers, and improved determination of passenger actions.

The plurality of cameras may comprise one or more infra-red cameras.

Infra-red cameras provide improved privacy for passengers in comparison to video cameras.

The plurality of monitoring devices may comprise a plurality of detection devices configured to detect the position of a mobile device of a passenger.

Mobile devices may interact with a detection device via any medium of wireless communication, e.g. WiFi, NFC, Bluetooth. For example, a detection device utilising Bluetooth/NFC may be placed at the boarding gate to indicate when a passenger is at, or is moving through, the boarding gate. Similarly, a detection device utilising Bluetooth/NFC may be placed at the entrance to the aircraft to indicate when a passenger is at, or is moving through, the entrance to the aircraft. A detection device utilising WiFi may monitor when a mobile device connects to a WiFi network (e.g. of the aircraft or of the airport) and retrieve the position of the mobile device through the WiFi network in order to monitor a position of the passenger associated with the mobile device.

The tracking system may comprise a plurality of tracking subsystems. Each tracking subsystem is configured to monitor a different area of the airport terminal and aircraft. As such, each tracking subsystem may comprise a plurality of monitoring devices located in the area monitored by the tracking subsystem.

The tracking system may be configured to continuously track a passenger as they move between areas monitored by one or more different monitoring devices and/or monitored by different tracking subsystems. For example, the tracking system may be configured to reconcile passengers leaving the boarding gate area with passengers entering the boarding bridge area.

The system may be configured to associate a passenger with an assigned seat number. This may be done by the tracking system identifying when a passenger approaches the boarding gate based on instructions concerning a particular seat number (e.g. via a boarding gate monitor or mobile phone notification). For example, a boarding gate camera may use facial recognition software to identify a passenger approaching the boarding gate in response to a call for a specific seat number. The scheduling system is therefore able to determine which boarding path the identified passenger is expected to follow (and, accordingly, whether the identified passenger will encounter/contribute to any congestion points or queues).

A preferred embodiment of the present invention will now be described in greater detail, by way of example only and with reference to the drawings, in which:
Figure 1 shows a schematic diagram of a boarding system for boarding a plurality of passengers onto an aircraft;
Figure 2 shows an airport terminal and an aircraft during boarding of a plurality of passengers onto the aircraft; and
Figure 3 shows an aircraft during boarding of a plurality of passengers onto the aircraft.

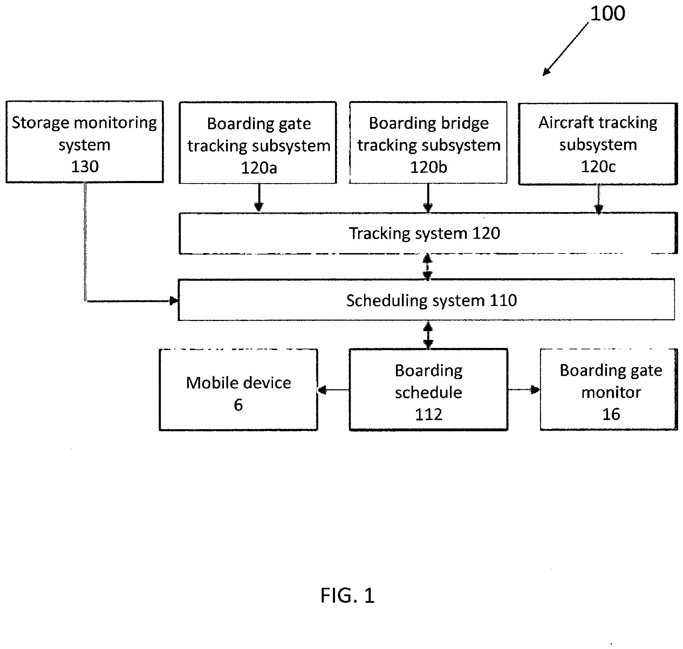

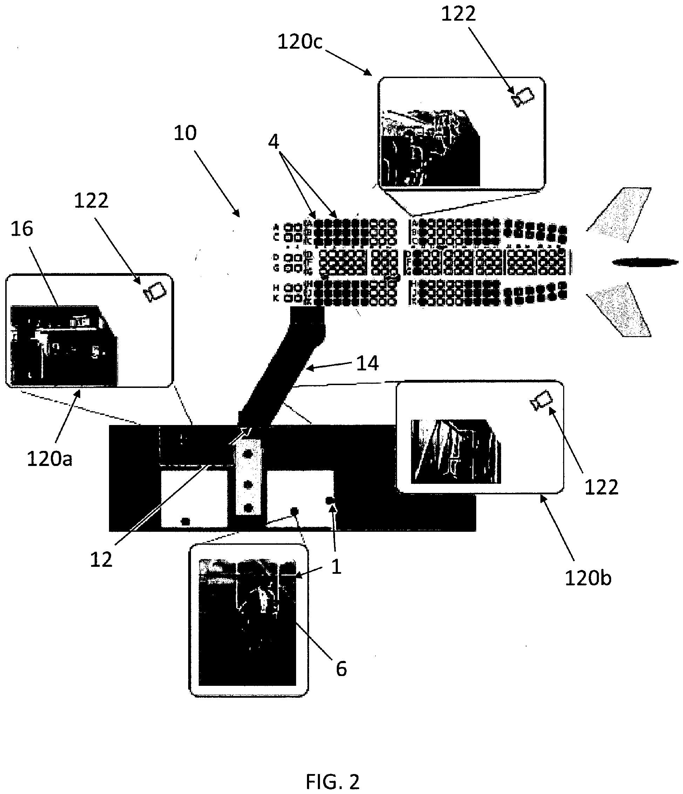

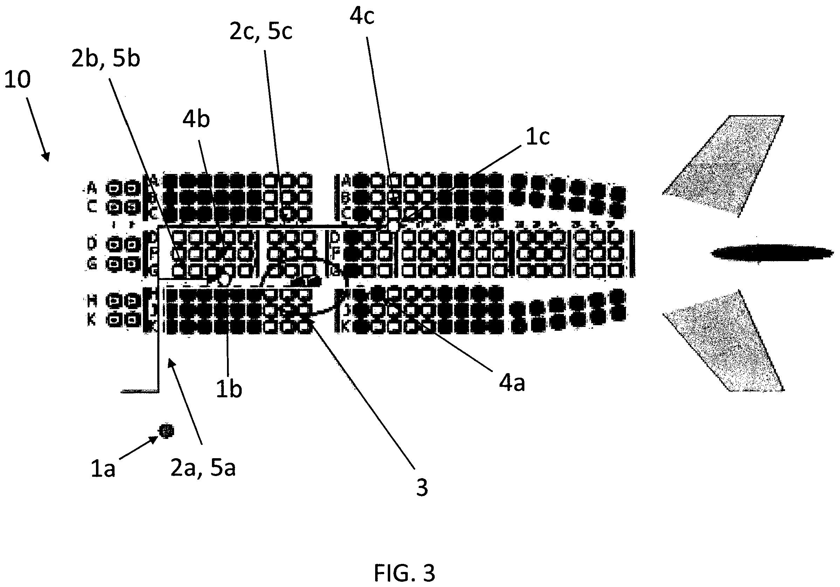

Figure 1 shows a boarding system 100 for boarding a plurality of passengers 1 onto an aircraft. Figure 2 shows an airport boarding terminal with an aircraft 10 utilising the boarding system 100 to assist the boarding of the plurality of passengers 1 onto the aircraft 10. Figure 3 shows the plurality of passengers 1a, 1b, 1c following their respective boarding paths 2a, 2b, 2c to assigned seats 4a, 4b, 4c on the aircraft 10 during the boarding process, wherein a congestion point 3 has formed in the aircraft 10 along the boarding path 2a.

As shown in Figure 1, the boarding system 100 comprises a scheduling system 110 and a tracking system 120. The tracking system 120 comprises a boarding gate tracking subsystem 120a, a boarding bridge tracking subsystem 120b and an aircraft tracking subsystem 120c. The scheduling system 120 is configured to modify the boarding schedule 112 in response to data received from the tracking system 120. The plurality of passengers 1 are informed of the changes/updates to the boarding schedule 112 by displaying at least part of the boarding schedule 112 on one or more boarding gate monitors 16 and/or by communicating at least part of the boarding schedule 112 (e.g. a personalised boarding schedule) to a mobile device 6 of one or more of the plurality of passengers 1.

With reference to Figures 2 and 3, during boarding of the aircraft 10 the boarding schedule 112 is used to determine when, and in what order, each of the plurality of passengers 1 is allowed access to a boarding gate 12. The scheduling system 110 is configured to adapt/modify the boarding schedule 112 in response to data received from the tracking system 120, particularly where a congestion point 3 is identified as being along an expected boarding path 5 of one or more passengers who are yet to board.

Typically, the process of boarding passengers 1 onto an aircraft 10 is performed on a priority basis according to the passenger ticket class and/or passenger accessibility profiles. However, passengers 1 can often get stuck standing in congestion points 3 (e.g. small or large queues) at any location between the boarding gate 12 and the passenger's assigned seat 4. For example, passengers 1 can get stuck moving through the boarding bridge 14 and in the aircraft 10 aisles. These congestion points 3 lead to a non-optimal boarding process resulting in longer boarding time and confusion during the boarding process. Furthermore, in such spaces, passengers may be crowded together, making it difficult to maintain distancing between passengers.

The boarding schedule 112 comprises the boarding order and boarding times of the plurality of passengers 1. Accordingly, the boarding schedule 112 dictates when each of the plurality of passengers 1 is allowed access to the boarding gate 12, e.g. when that passenger 1 is permitted to pass through the boarding gate 12 and begin moving along a boarding path 2. In other words, the access of each of the plurality of passengers 1 to the boarding gate is controlled by the scheduling system 110 in accordance with the boarding schedule 112. Initially, the boarding schedule 112 may be similar to conventional boarding schedules, in that the boarding order/boarding times of the plurality of passengers 1 is based on passenger ticket class and/or passenger accessibility profiles.

The expected boarding path 5 of a passenger 1 extends between the boarding gate 12 of the airport boarding terminal and the assigned seat 4 of the passenger 1 and is the route the system 100 expects the passenger 1 to take during boarding. Thus, the expected boarding path 5 is usually the fastest and/or shortest route from the boarding gate 12 to the assigned seat 4 that the passenger 1 will naturally take. If a congestion point 3 is along an expected boarding path 5 of a passenger, then the system 100 will adapt the boarding process by modifying the boarding schedule 112 so that passengers 1 avoid joining the congestion point 3.

The (actual) boarding path 2 of each passenger 1 also extends between the boarding gate 12 of the airport boarding terminal and the assigned seat 4 of the passenger 1, but is the route from the boarding gate 12 to the assigned seat 4 of the passenger 1 that the passenger 1 is actually following during the boarding process, e.g. the actual boarding path 2 that the passenger 1 is moving along. In some situations, the actual boarding path 2 of a passenger 1 may correspond to the expected boarding path 5, or the behaviour of the passenger 1 may result in the (actual) boarding path 2 deviating from the expected boarding path 5. For example, the expected boarding path 5 of a passenger 1 may extend from the boarding gate 12 to the assigned seat 4 of the passenger 1 via a front entrance of the aircraft 10. However, the passenger 1 may (for any reason, e.g. human error) actually follow the boarding path 2 that extends from the boarding gate 12 to the assigned seat 4 of the passenger 1 via a rear entrance of the aircraft 10.

It is often the case that a passenger 1 can reach their assigned seat 4 via a number of different boarding paths 2, and thus if the tracking system 120 identifies that a passenger 1 has an expected boarding path 5 that passes through a congestion point 3, then the boarding system 100 can propose an alternative boarding path for each of the identified one or more passengers 1 and notify the identified one or more passengers 1 of their proposed alternative boarding path. If there are no alternative boarding paths available, or if each alternative boarding path passes through the congestion point 3, then the boarding schedule 112 is modified to suspend access to the boarding gate 12 of passenger 1, at least until the congestion point 3 is resolved, thus preventing the passenger 1 from exacerbating the congestion point 3. One or more other passengers 1, who have expected boarding paths 5 (or available alternative boarding paths) that do not pass through a congestion point 3, may be prioritised by notifying the one or more passengers 1 that they can/should approach the boarding gate 12 to begin boarding straight away.

Regarding the tracking system 120, each of the tracking subsystems 120a-120c comprises one or more monitoring devices 122. In the preferred embodiment the monitoring devices 122 are video cameras. Each monitoring device 122 of the tracking system 120 is configured to monitor the behaviour of each of the plurality of passengers 1 when the passengers 1 are moving towards and/or along their respective (actual) boarding path 2.

The tracking subsystems 120a-120c described herein are used to conveniently describe groups of the monitoring devices 122 of the tracking system 120 based on the areas monitored by those monitoring devices 122. However, it will be appreciated that these are arbitrary groupings that do not affect the functionality of the tracking system 120.

The boarding gate tracking subsystem 120a is configured to monitor the behaviour of each of the plurality of passengers 1 when moving around and through the boarding gate 12, and in particular is configured to determine when each of the plurality of passengers 1 are moving towards the boarding gate 12 (e.g. the start of each respective boarding path 2). The boarding bridge tracking subsystem 120b is configured to monitor the behaviour of each of the plurality of passengers 1 when moving along a boarding bridge 14 (in other words, when moving along the part of each respective boarding path 2 between the boarding gate 12 and an entrance of the aircraft 10). The aircraft tracking subsystem 120c is configured to monitor the behaviour of each of the plurality of passengers 1 when moving within the aircraft 10 (in other words, when moving along the part of each respective boarding path 2 between the entrance of the aircraft 10 and the assigned seat 4 of the respective passenger 1).

For example, as a passenger 1 approaches the boarding gate 12, the passenger 1 is monitored by a video camera 122 of the boarding gate tracking subsystem 120a. The boarding system 100 is configured to associate a passenger 1 with their assigned seat 4 (and hence an expected boarding path 5) based on data received from the boarding gate tracking system 120a. This may be done by the boarding gate tracking subsystem 120a associating a passenger 1 that approaches the boarding gate 12 (and passes through the boarding gate 12) with an assigned seat number 4 determined when a boarding pass of the passenger 1 is scanned. Alternatively, the boarding gate tracking system 120a may be able to use facial recognition software to identify a passenger 1 and retrieve the information from an airline database (e.g. the passport information of a passenger 1 and the assigned seat 4 of a passenger 1).

As the passenger 1 passes through the boarding gate 12 and enters the boarding bridge 14, the passenger 1 moves out of the field of sight of the boarding gate tracking subsystem 120a but will enter the field of sight of the boarding bridge tracking subsystem 120b. The tracking system 120 is configured to reconcile passengers 1 leaving the boarding gate area with passengers 1 entering the boarding bridge area in order to continuously track the passengers 1. By keeping each passenger continuously within view of at least one monitoring device 122 as they move along their boarding paths 2, it is possible to individually track each passenger 1 without requiring complex identification techniques, such as facial recognition or the like.

The behaviour of each of the plurality of passengers 1 is monitored by the boarding bridge tracking subsystem 120b as they move along the boarding bridge 14 from the boarding gate 12 to the entrance of the aircraft 10.

As the passenger 1 passes through the entrance of the aircraft 10 and enters the aircraft 10, the passenger 1 moves out of the field of sight of the boarding bridge tracking subsystem 120b but will enter the field of sight of the aircraft tracking subsystem 120c. The tracking system 120 is configured to reconcile passengers 1 leaving the boarding bridge area with passengers 1 entering the aircraft 10 in order to continuously track the passengers 1. The behaviour of each of the plurality of passengers 1 is monitored by the aircraft tracking subsystem 120c as they move within the aircraft 10 (e.g. along the aisles of the aircraft 10).

Accordingly, the data collected by the monitoring devices 122 of the tracking system 120, as described above, can be used to identify if a congestion point 3 (e.g. one or more passengers 1 that are stationary, or moving extremely slowly) has formed. A congestion point 3 can arise for any number of reasons, and depending on its location, can affect the boarding of other passengers 1.

Considering Figure 3, during the boarding process a congestion point 3 has formed in one of the aisles of the aircraft 10, and this is identified by the boarding system 100 based on the data received from the aircraft tracking subsystem 120c. The data received from the aircraft tracking subsystem 120c can also be used to identify a cause of the congestion point 3 based on an activity being performed by one or more passengers (e.g. a passenger 1 struggling to stow luggage in an overhead storage bin), and to estimate a time for congestion at the congestion point 3 to be resolved based on the cause of the congestion point 3.

One or more passengers 1a are identified from amongst the plurality of passengers 1 that a) have not yet been granted access to the boarding gate 12 and that b) have expected boarding paths 5a that pass through the congestion point 3. Next, in response, the scheduling system 110 adjusts the boarding schedule 112 to suspend granting of access to the identified one or more passengers 1a for a period of time.

As seen in Figure 3, the congestion point 3 obstructs the expected boarding path 5a corresponding to passenger 1a. If passenger 1a is waiting in a boarding waiting area, e.g. they have not yet been granted access, then the boarding schedule 112 is adjusted to suspend the granting of access to passenger 1a for a period of time (e.g. until the granting of access to the passenger 1a will mean the passenger 1a does not encounter/contribute to the congestion point 3). This period of time, as discussed above, may be based on a time for the congestion at the congestion point 3 to be resolved, which in turn may be estimated based on at least one of the cause, size, and location of the congestion point 3. Thus, by the time the passenger 1a is granted access to the boarding gate 12, the congestion point 3 does not impact the passenger's movement along their boarding path 2a (which may correspond to the expected boarding path 5a) and the passenger 1a is not inconvenienced by having to stand waiting in the aircraft 10. Accordingly, the time for of the passenger 1a to travel along their boarding path 2a is minimised. Moreover, minimising the size and/or formation of queues and congestion points 3 improves the physical distancing of passengers 1 during the aircraft boarding process.

Identifying a cause of the congestion point 3 comprises determining an activity being performed by one or more passengers 1 associated with the congestion point 3, which may be the cause of the congestion point 3. Determining the activity being performed comprises analysing the video recorded by the tracking system 120 of the one or more passengers 1 that are involved with the congestion point 3. For example, activities may include positioning luggage in an overhead bin, taking off a coat or jacket, slow walking perhaps as a result of being on crutches or as a result of young children, stopping to pick up a dropped item of clothing/luggage, waiting for other passengers, etc. Each of these activities can have a predetermined congestion time associated with the activity and/or the congestion time associated with an activity can be determined via machine learning analysis of the data acquired by the tracking system 120.

In the example scenario shown in Figure 3, the passenger 1a only has one route they can utilise to get to their assigned seat 4a, therefore the expected boarding path 5a corresponds to the actual boarding path 2a and the passenger 1a is unable to board via any other alternative boarding paths.

However, if one or more alternative boarding paths were available to passenger 1a, then the scheduling system 110 could propose an alternative boarding path for the passenger 1a that avoids the congestion point 3 and notify the passenger 1a of the proposed alternative boarding path. This would avoid suspending granting of access to the boarding gate 12 of the passenger 1a but still reduce the problem of congestion points 3. In this case, the actual boarding path 2a will correspond to the proposed alternative boarding path and not the initial expected boarding path 5a.

In addition, the system 100 is configured to identify one or more passengers 1b, 1c from amongst the plurality of passengers 1 that have not yet been granted access to the boarding gate 12 and that have expected boarding paths 5b, 5c that do not pass through the congestion point 3; and in response, adjusting the boarding schedule 112 to prioritise granting of access to the identified one or more passengers 1b, 1c.

Considering Figure 3, the identified congestion point 3 does not obstruct the expected boarding path 5c because the assigned seat 4c is located on a different aisle to the congestion point 3. Moreover, the identified congestion point 3 does not obstruct the expected boarding path 5b because, while the assigned seat 4b is located on the same aisle as the congestion point 3, it is located between the entrance of the aircraft 10 and the congestion point 3. Passengers 1b, 1c waiting in the boarding waiting area are therefore able to board without being affected by the congestion point 3 and granting of access to these passengers 1b, 1c can be prioritised (e.g. passengers 1b, 1c can be allowed access to the boarding gate 12 before passenger 1a). Thus, by adjusting the boarding schedule 112, passengers 1b, 1c that will not affected by a congestion point 3 can be boarded in lieu of passengers 1a that will be affected by/exacerbate a congestion point 3 in order to reduce the overall time to board the plurality of passengers 1 onto the aircraft 10.

As the passengers 1b, 1c are not affected by congestion point 3, their actual boarding paths 2b, 2c correspond to their expected boarding paths 5b, 5c.

At least part of the boarding schedule 112, in the form of passenger notifications and/or passenger information, can be displayed on one or more boarding gate monitors 16 to, for example, inform passengers 1 that have not yet been granted access to the boarding gate 12 when they should approach the boarding gate 12 to be granted access.

At least part of the boarding schedule 112 includes the assigned seat number 4 of one or more passengers 1 and may also preferably include a time that the passenger 1 with the displayed assigned seat 4 will be granted access to the boarding gate 12. The boarding gate monitors 16 can also display a recommended status of the passenger 1 with the specified assigned seat 4, such as "Boarding Now" or "Get Ready to Board".

At least part of the boarding schedule 112, in the form of a personalised boarding schedule, can be communicated to a mobile device 6 of one or more of the plurality of passengers 1. The personalised boarding schedule communication comprises information including an assigned seat 4 of one or more passengers 1 associated with the mobile device 6 and/or a time that the passenger 1 with the specified assigned seat 4 will be granted access to the boarding gate 12. The personalised boarding schedule communication can also include a notification (e.g. an alert or vibration) to notify the passenger 1 of a change of recommended status of the one or more passengers 1 associated with the mobile device 6. For example, the notification may indicate whether a passenger 1 should be "Boarding Now", or should "Get Ready to Board".

By providing passengers 1 with specific, continuously updated information about when they should approach the boarding gate 12, the boarding system 100 and method can avoid confusion during the boarding process and prevent congestion points from developing before the boarding gate 12 and/or on actual and expected boarding paths 2, 5.

The scheduling system 110 is also configured to modify the boarding schedule 112 based on the data received from the aircraft overhead storage monitoring system 130, e.g. based on an availability of space on the aircraft 10 for overhead storage of luggage. If there is no available space for a passenger 1 to store their luggage near to their assigned seat 4, this can often cause congestion points/queues as this passenger obstructs other passengers 1 in their search for somewhere to store their luggage.

In an example, if the boarding system 100 (via the aircraft overhead storage monitoring system 130) identifies that there is no available space for a passenger 1 that has not yet been granted access to the boarding gate 12 to store their luggage near to their assigned seat 4, the system 100 can propose an alternative boarding path for the passenger 1 that passes through a location of available storage space, and notify the passenger 1 (e.g. via the boarding gate monitors 16 or a mobile device 6) of the proposed alternative boarding path and/or the location of available storage space in the aircraft 10. The scheduling system 110 can then modify the boarding schedule 112 based on the proposed alternative boarding path of a passenger 1 (e.g. an updated expected boarding path 5 could be obstructed by a congestion point 3 that did not obstruct the original expected boarding path 5). As such, a passenger 1 needing extra space and time for storing their luggage is accommodated for, and it is ensured that any proposed alternative boarding paths (e.g. updated expected boarding paths 5) avoid and/or prevent the causation/exacerbation of any congestion points 3.

Alternatively, a notification may be provided to airport staff, for example operating the boarding gate 12, that there is insufficient overhead storage space near the assigned seat 4 of this passenger 1. The airport staff may invite the passenger 1 to put their bags into checked baggage, i.e. to be stored in the hold of the aircraft 10.

In a further example, the boarding system 100 comprises predictive and/or machine learning software such that the system 100 is configured to be able to predict a future congestion point along an expected boarding path 5 based on the data received from the tracking system 120. The scheduling system 110 is configured to modify the boarding schedule 112 in response to identification of the future congestion point in the same, or at least similar, manner as in response to the identification of a (current) congestion point 3, as described above.

Accordingly, the system 100 is configured to process the data received from the tracking system 120 and make predictions based on this data. For example, a passenger 1 may be identified as moving slowly and/or unexpectedly (e.g. the identified passenger 1 may be on crutches, have a large number of bags, or may be lost and/or unsure of their boarding path 2). This may not necessarily lead to a congestion point 3 (e.g. if there is space for other passengers 1 to pass by the identified passenger 1), but the system 100 may recognise that a congestion point 3 will occur when the slow passenger 1 reaches a specific location on their boarding path 2, such as a narrow part of the boarding bridge 14 or the aisles of the aircraft 10. Therefore the system 100 may predict that a future congestion point will develop, and modify the boarding schedule 112 in response to identification of the future congestion point.

In a further example, the system 100 is configured to receive passenger information from an airline provider, such as an age of the passenger 1, a size of a group associated with the passenger 1, or a frequency of travel associated with the passenger 1. This may allow the system 100 to make initial predictions on the behaviour of one or more passengers 1 and their likelihood of causing a congestion point 3 (e.g. a single frequent flyer passenger 1 may be less likely to cause congestion during the boarding process, whereas a family with young children may be more likely to cause congestion during the boarding process), and make initial modifications to the boarding schedule 112 so that passengers with a high risk of congestion behaviour are provided with additional time to travel along their actual/expected boarding path 2, 5.

In a further example, the tracking system 120 comprises an airport tracking subsystem (not shown) comprising a plurality of airport monitoring devices. The airport tracking subsystem operates in a similar manner to the boarding gate tracking subsystem 120a, the boarding bridge tracking subsystem 120b, and the aircraft tracking subsystem 120c, but wherein the plurality of airport monitoring devices are configured to monitor one or more areas of the airport close to where the boarding gate of the aircraft 10 is located.

The scheduling system 110 is therefore able to modify the boarding schedule 112 based on a behaviour of each of the plurality of passengers 1 when in the airport (e.g. prior to boarding). For example, the airport tracking system could identify that one or more passengers 1, who are shortly due to be granted access to their respective boarding paths 2, are far away from the boarding gate 12 or are stuck in a congestion point 3 and/or an amenity of the airport. In response, the scheduling system 110 can adjust the boarding schedule 112 to suspend granting of access to the identified one or more passengers 1 for a period of time. The period of time may be based on the estimated time for the one or more passengers 1 to reach the boarding gate 112.

Whilst in the preferred embodiments described above, the plurality of monitoring devices 122 of the tracking system 120 comprise a plurality of video cameras, alternatively or additionally the plurality of monitoring devices 122 may comprise a plurality of infrared cameras. This may provide improved privacy for passengers in comparison to video cameras.

Furthermore, the plurality of monitoring devices 122 may comprise (alternatively or additionally) a plurality of detection devices configured to detect the position of a mobile device 6 of a passenger 1. Mobile devices 6 may interact with a detection device via any medium of wireless communication, e.g. WiFi, NFC, Bluetooth. For example, a detection device utilising Bluetooth/NFC may be placed at the boarding gate 12 to indicate when a passenger 1 is at, or is moving through, the boarding gate 12. Similarly, a detection device utilising Bluetooth/NFC may be placed at the entrance to the aircraft 10 to indicate when a passenger 1 is at, or is moving through, the entrance to the aircraft.

A detection device utilising WiFi may monitor when a mobile device 6 connects to a WiFi network (e.g. of the aircraft 10 or of the airport) and retrieve the position of the mobile device 6 through the WiFi network in order to monitor a position of a passenger 1 associated with the mobile device 6.

Using a variety of different types of monitoring devices 122 enables more accurate tracking of passenger 1 behaviour.

## Claims

1. A boarding system (100) for boarding a plurality of passengers (1a-c) onto an aircraft (10), each passenger having an assigned seat (4a-c) on the aircraft, the boarding system comprising:
a scheduling system (110) configured to control access of each of the plurality of passengers (1a-c) to a boarding gate (12) in accordance with a boarding schedule (112); and
a tracking system (120) comprising a plurality of monitoring devices (122), the tracking system being configured to monitor behaviour of each of the plurality of passengers (1a-c) when moving along a respective boarding path (2a-c), each boarding path extending between the boarding gate (12) and the assigned seat (4a-c) of the respective passenger (1a-c);
wherein the scheduling system (110) is configured to:
identify a congestion point (3) along an expected boarding path (5) of a passenger (1) based on data received from the tracking system (120);
**characterized in that** the scheduling system (110) is further configured to:
identify one or more passengers (1) from amongst the plurality of passengers (1a-c) that have not yet been granted access to the boarding gate (12) and that have an expected boarding path (5) that does not pass through the congestion point (3); and
in response, adjust the boarding schedule (112) to prioritise granting of access to the identified one or more passengers.

2. A boarding system as claimed in claim 1, wherein the scheduling system (100) is configured to:
identify one or more passengers (1) that have an expected boarding path (5) that passes through the congestion point (3); and
in response, propose an alternative boarding path for each of the identified one or more passengers (1) and notify the identified one or more passengers of their proposed alternative boarding path.

3. A boarding system as claimed in any preceding claim, wherein the scheduling system (100) is configured to:
identify one or more passengers (1) from amongst the plurality of passengers (1a-c) that have not yet been granted access to the boarding gate (12) and that have an expected boarding path (5) that passes through the congestion point (3); and
in response, adjust the boarding schedule (112) to suspend granting of access to the identified one or more passengers for a period of time.

4. A boarding system as claimed in claim 3, wherein the scheduling system (100) is configured to identify a cause of the congestion point (3) based on the data received from the tracking system (120); wherein the scheduling system (100) is configured to estimate a time for congestion at the congestion point (3) to be resolved based on the cause of the congestion point; and wherein the period of time is based on the estimated time for the congestion to be resolved.

5. A boarding system as claimed in claim 4, wherein the scheduling system (100) is configured to determine an activity being performed by one or more passengers (1) associated with the congestion point; and wherein the cause of the congestion point is determined based on the determined activity.

6. A boarding system as claimed in any preceding claim, wherein the scheduling system (100) is configured to:
control passenger access to the boarding gate (12) by displaying at least part of the boarding schedule (112) on one or more boarding gate monitors (16); and/or
control passenger access to the boarding gate (12) by communicating a personalised boarding schedule to a mobile device (6) of one or more of the plurality of passengers (1).

7. A boarding system as claimed in any preceding claim, wherein the scheduling system (100) is configured to:
predict a future congestion point (3) along an expected boarding path (5) of a passenger (1) based on data received from the tracking system (120); and
modify the boarding schedule (112) in response to identification of the future congestion point (3).

8. A boarding system as claimed in any preceding claim, wherein the plurality of monitoring devices (122) comprises a plurality of cameras; preferably wherein the plurality of cameras comprises a plurality of video cameras and/or a plurality of infra-red cameras.

9. A computer-implemented method of boarding a plurality of passengers (1a-c) onto an aircraft (10), each passenger having an assigned seat (4a-c) on the aircraft, the method comprising:
controlling access of each of the plurality of passengers (1a-c) to a boarding gate (12) in accordance with a boarding schedule (112) using a scheduling system (100);
monitoring behaviour of each of the plurality of passengers (1a-c) when moving along a respective boarding path (2a-c) using a tracking system (120) comprising a plurality of monitoring devices (122), each boarding path extending between the boarding gate (12) and the assigned seat (4a-c) of the respective passenger (1a-c); and
modifying the boarding schedule (112) in response to identification of a congestion point (3) along an expected boarding path (5) of a passenger (1) based on data received from the tracking system (120).

10. A computer-implemented method as claimed in claim 9, the method comprising:
identifying one or more passengers (1) that have an expected boarding path (5) that passes through the congestion point (3); and
in response, proposing an alternative boarding path for each of the identified one or more passengers (1) and notifying the identified one or more passengers of their proposed alternative boarding path.

11. A computer-implemented method as claimed in claim 9 or claim 10, the method comprising:
identifying one or more passengers (1) from amongst the plurality of passengers (1a-c) that have not yet been granted access to the boarding gate (12) and that have an expected boarding path (5) that does not pass through the congestion point (3); and
in response, adjusting the boarding schedule (112) to prioritise granting of access to the identified one or more passengers.

12. A computer-implemented method as claimed in any of claims 9 to 11, the method comprising:
identifying one or more passengers (1) from amongst the plurality of passengers (1a-c) that have not yet been granted access to the boarding gate (12) and that have an expected boarding path (5) that passes through the congestion point (3); and
in response, adjusting the boarding schedule (112) to suspend granting of access to the identified one or more passengers for a period of time.

13. A computer-implemented method as claimed in claim 12, the method comprising:
identifying a cause of the congestion point (3) based on the data received from the tracking system (120); and
estimating a time for congestion at the congestion point (3) to be resolved based on the cause of the congestion point;
wherein the period of time is based on the estimated time for the congestion to be resolved; preferably wherein identifying a cause of the congestion point comprises determining an activity being performed by one or more passengers (1) associated with the congestion point; and wherein the cause of the congestion point is determined based on the determined activity.

14. A computer-implemented method as claimed in any of claims 9 to 13, the method comprising:
controlling passenger access to the boarding gate (12) by displaying at least part of the boarding schedule (112) on one or more boarding gate monitors (16); and/or
controlling passenger access to the boarding gate (12) by communicating a personalised boarding schedule to a mobile device (6) of one or more of the plurality of passengers (1).

15. A computer-implemented method as claimed in any of claims 9 to 14, the method comprising:
predicting a future congestion point (3) along an expected boarding path (5) of a passenger (1) based on the data received from the tracking system (120); and
modifying the boarding schedule (112) in response to identification of the future congestion point (3).

## Patentansprüche

1. Einstiegssystem (100) zum Einsteigen einer Vielzahl von Passagieren (1a-c) in ein Flugzeug (10), wobei jeder Passagier einen zugewiesenen Sitzplatz (4a-c) in dem Flugzeug aufweist, wobei das Einstiegssystem Folgendes umfasst:
ein Planungssystem (110), das konfiguriert ist, um einen Zugang jedes der Vielzahl von Passagieren (1a-c) zu einem Einstiegsgate (12) gemäß einem Einstiegsplan (112) zu steuern; und
ein Nachverfolgungssystem (120), umfassend eine Vielzahl von Überwachungsvorrichtungen (122), wobei das Nachverfolgungssystem konfiguriert ist, um ein Verhalten jedes der Vielzahl von Passagieren (1a-c) zu überwachen, wenn sie sich entlang eines jeweiligen Einstiegswegs (2a-c) bewegen, wobei sich jeder Einstiegsweg zwischen dem Einstiegsgate (12) und dem zugewiesenen Sitzplatz (4a-c) des jeweiligen Passagiers (1a-c) erstreckt;
wobei das Planungssystem (110) konfiguriert ist, um:
einen Staupunkt (3) entlang eines erwarteten Einstiegswegs (5) eines Passagiers (1) basierend auf von dem Nachverfolgungssystem (120) empfangenen Daten zu identifizieren;
**dadurch gekennzeichnet, dass** das Planungssystem (110) ferner konfiguriert ist, um:
einen oder mehrere Passagiere (1) aus der Vielzahl von Passagieren (1a-c) zu identifizieren, denen noch kein Zugang zu dem Einstiegsgate (12) gewährt wurde und die einen erwarteten Einstiegsweg (5) aufweisen, der nicht durch den Staupunkt (3) passiert; und
als Reaktion den Einstiegsplan (112) anzupassen, um ein Zuganggewähren für den oder die identifizierten Passagiere zu priorisieren.

2. Einstiegssystem nach Anspruch 1, wobei das Planungssystem (100) konfiguriert ist, um:
einen oder mehrere Passagiere (1) zu identifizieren, die einen erwarteten Einstiegsweg (5) aufweisen, der durch den Staupunkt (3) passiert; und
als Reaktion einen alternativen Einstiegsweg für jeden des einen oder der mehreren identifizierten Passagiere vorzuschlagen (1) und den einen oder die mehreren identifizierten Passagiere über ihren vorgeschlagenen alternativen Einstiegsweg zu informieren.

3. Einstiegssystem nach einem der vorhergehenden Ansprüche, wobei das Planungssystem (100) konfiguriert ist, um:
einen oder mehrere Passagiere (1) aus der Vielzahl von Passagieren (1a-c) zu identifizieren, denen noch kein Zugang zu dem Einstiegsgate (12) gewährt wurde und die einen erwarteten Einstiegsweg (5) aufweisen, der durch den Staupunkt (3) passiert; und
als Reaktion den Einstiegsplan (112) anzupassen, um ein Zuganggewähren für den oder die identifizierten Passagiere für einen Zeitraum auszusetzen.

4. Einstiegssystem nach Anspruch 3, wobei das Planungssystem (100) konfiguriert ist, um eine Ursache des Staupunkts (3) basierend auf den von dem Nachverfolgungssystem (120) empfangenen Daten zu identifizieren; wobei das Planungssystem (100) konfiguriert ist, um basierend auf der Ursache des Staupunkts eine Zeit bis zum Beseitigen des Staus an dem Staupunkt (3) zu schätzen; und wobei die Zeitspanne auf der geschätzten Zeit bis zum Beseitigen des Staus basiert.

5. Einstiegssystem nach Anspruch 4, wobei das Planungssystem (100) konfiguriert ist, um eine Aktivität zu bestimmten, die von einem oder mehreren Passagieren (1) durchgeführt wird, die mit dem Staupunkt assoziiert sind; und wobei die Ursache des Staupunkts basierend auf der bestimmten Aktivität bestimmt wird.

6. Einstiegssystem nach einem der vorhergehenden Ansprüche, wobei das Planungssystem (100) konfiguriert ist, um:
den Passagierzugang zu dem Einstiegsgate (12) durch Darstellen mindestens eines Teils des Einstiegsplans (112) auf einem oder mehreren Einstiegsgate-Monitoren (16) zu steuern; und/oder
den Passagierzugang zu dem Einstiegsgate (12) durch Übermitteln eines personalisierten Einstiegsplans an eine mobile Vorrichtung (6) eines oder mehrerer der Vielzahl von Passagieren (1) zu steuern.

7. Einstiegssystem nach einem der vorhergehenden Ansprüche, wobei das Planungssystem (100) konfiguriert ist, um:
einen zukünftigen Staupunkt (3) entlang eines erwarteten Einstiegswegs (5) eines Passagiers (1) basierend auf von dem Nachverfolgungssystem (120) empfangenen Daten vorherzusagen; und
den Einstiegsplan (112) als Reaktion auf die Identifizierung des zukünftigen Staupunkts (3) zu ändern.

8. Einstiegssystem nach einem der vorhergehenden Ansprüche, wobei die Vielzahl von Überwachungsvorrichtungen (122) eine Vielzahl von Kameras umfasst; wobei die Vielzahl von Kameras vorzugsweise eine Vielzahl von Videokameras und/oder eine Vielzahl von Infrarotkameras umfasst.

9. Computerimplementiertes Verfahren zum Einsteigen einer Vielzahl von Passagieren (1a-c) in ein Flugzeug (10), wobei jeder Passagier einen zugewiesenen Sitzplatz (4a-c) in dem Flugzeug aufweist, wobei das Verfahren Folgendes umfasst:
Steuern des Zugangs jedes der Vielzahl von Passagieren (1a-c) zu einem Einstiegsgate (12) gemäß einem Einstiegsplan (112) mithilfe eines Planungssystems (100);
Überwachen des Verhaltens jedes der Vielzahl von Passagieren (1a-c), wenn sie sich entlang eines jeweiligen Einstiegswegs (2a-c) bewegen, mithilfe eines Nachverfolgungssystems (120), umfassend eine Vielzahl von Überwachungsvorrichtungen (122), wobei sich jeder Einstiegsweg zwischen dem Einstiegsgate (12) und dem zugewiesenen Sitzplatz (4a-c) des jeweiligen Passagiers (1a-c) erstreckt; und
Ändern des Einstiegsplans (112) als Reaktion auf die Identifizierung eines Staupunkts (3) entlang eines erwarteten Einstiegswegs (5) eines Passagiers (1) basierend auf von dem Nachverfolgungssystem (120) empfangenen Daten.

10. Computerimplementiertes Verfahren nach Anspruch 9, wobei das Verfahren Folgendes umfasst:
Identifizieren eines oder mehrerer Passagiere (1), die einen erwarteten Einstiegsweg (5) aufweisen, der durch den Staupunkt (3) passiert; und
als Reaktion Vorschlagen eines alternativen Einstiegswegs für jeden des einen oder der mehreren identifizierten Passagiere (1) und Informieren des einen oder der mehreren identifizierten Passagiere über ihren vorgeschlagenen alternativen Einstiegsweg.

11. Computerimplementiertes Verfahren nach Anspruch 9 oder Anspruch 10, wobei das Verfahren Folgendes umfasst:
Identifizieren eines oder mehrerer Passagiere (1) aus der Vielzahl von Passagieren (1a-c), denen noch kein Zugang zu dem Einstiegsgate (12) gewährt wurde und die einen erwarteten Einstiegsweg (5) aufweisen, der nicht durch den Staupunkt (3) passiert; und
als Reaktion Anpassen des Einstiegsplans (112), um ein Zuganggewähren für den oder die identifizierten Passagiere zu priorisieren.

12. Computerimplementiertes Verfahren nach einem der Ansprüche 9 bis 11, wobei das Verfahren Folgendes umfasst:
Identifizieren eines oder mehrerer Passagiere (1) aus der Vielzahl von Passagieren (1a-c), denen noch kein Zugang zu dem Einstiegsgate (12) gewährt wurde und die einen erwarteten Einstiegsweg (5) aufweisen, der durch den Staupunkt (3) passiert; und
als Reaktion Anpassen des Einstiegsplans (112), um ein Zuganggewähren für den oder die identifizierten Passagiere für einen Zeitraum auszusetzen.

13. Computerimplementiertes Verfahren nach Anspruch 12, wobei das Verfahren Folgendes umfasst:
Identifizieren einer Ursache des Staupunkts (3) basierend auf den von dem Nachverfolgungssystem (120) empfangenen Daten; und Schätzen einer Zeit bis zum Beseitigen des Staus an dem Staupunkt (3) basierend auf der Ursache des Staupunkts;
wobei die Zeitspanne auf der geschätzten Zeit bis zum Beseitigen des Staus basiert; wobei das Identifizieren einer Ursache des Staupunkts vorzugsweise das Bestimmen einer Aktivität umfasst, die von einem oder mehreren Passagieren (1) durchgeführt wird, die mit dem Staupunkt assoziiert sind; und wobei die Ursache des Staupunkts basierend auf der bestimmten Aktivität bestimmt wird.

14. Computerimplementiertes Verfahren nach einem der Ansprüche 9 bis 13, wobei das Verfahren Folgendes umfasst:
Steuern des Passagierzugangs zu dem Einstiegsgate (12) durch Darstellen mindestens eines Teils des Einstiegsplans (112) auf einem oder mehreren Einstiegsgate-Monitoren (16); und/oder Steuern des Passagierzugangs zu dem Einstiegsgate (12) durch Übermitteln eines personalisierten Einstiegsplans an eine mobile Vorrichtung (6) eines oder mehrerer der Vielzahl von Passagieren (1).

15. Computerimplementiertes Verfahren nach einem der Ansprüche 9 bis 14, wobei das Verfahren Folgendes umfasst:
Vorhersagen eines zukünftigen Staupunkts (3) entlang eines erwarteten Einstiegswegs (5) eines Passagiers (1) basierend auf den von dem Nachverfolgungssystem (120) empfangenen Daten; und Ändern des Einstiegsplans (112) als Reaktion auf die Identifizierung des zukünftigen Staupunkts (3).

## Revendications

1. Système d'embarquement (100) permettant d'embarquer une pluralité de passagers (1a-c) à bord d'un aéronef (10), chaque passager ayant un siège attribué (4a-c) à bord de l'aéronef, le système d'embarquement comprenant :
un système de planification (110) configuré pour commander l'accès de chacun de la pluralité de passagers (1a-c) à une porte d'embarquement (12) conformément à un horaire d'embarquement (112) ; et
un système de suivi (120) comprenant une pluralité de dispositifs de surveillance (122), le système de suivi étant configuré pour surveiller le comportement de chacun de la pluralité de passagers (1a-c) lorsqu'ils se déplacent le long d'un chemin d'embarquement (2a-c) respectif, chaque chemin d'embarquement s'étendant entre la porte d'embarquement (12) et le siège attribué (4a-c) du passager (1a-c) respectif ;
dans lequel le système de planification (110) est configuré pour :
identifier un point d'encombrement (3) le long d'un chemin d'embarquement prévu (5) d'un passager (1) sur la base de données reçues à partir du système de suivi (120) ;
**caractérisé en ce que** le système de planification (110) est en outre configuré pour :
identifier un ou plusieurs passagers (1) parmi la pluralité de passagers (1a-c) qui n'ont pas encore été autorisés à accéder à la porte d'embarquement (12) et qui ont un chemin d'embarquement prévu (5) qui ne passe pas par le point d'encombrement (3) ; et
en réponse, ajuster l'horaire d'embarquement (112) afin de donner la priorité à l'octroi de l'accès au ou aux passagers identifiés.

2. Système d'embarquement selon la revendication 1, dans lequel le système de planification (100) est configuré pour :
identifier un ou plusieurs passagers (1) qui ont un chemin d'embarquement prévu (5) qui passe par le point d'encombrement (3) ; et
en réponse, proposer un chemin d'embarquement alternatif pour chacun du ou des passagers identifiés (1) et notifier au ou aux passagers identifiés leur chemin d'embarquement alternatif proposé.

3. Système d'embarquement selon l'une quelconque revendication précédente, dans lequel le système de planification (100) est configuré pour :
identifier un ou plusieurs passagers (1) parmi la pluralité de passagers (1a-c) qui n'ont pas encore été autorisés à accéder à la porte d'embarquement (12) et qui ont un chemin d'embarquement prévu (5) qui passe par le point d'encombrement (3) ; et
en réponse, ajuster l'horaire d'embarquement (112) afin de suspendre l'octroi de l'accès au ou aux passagers identifiés pour une période de temps.

4. Système d'embarquement selon la revendication 3, dans lequel le système de planification (100) est configuré pour identifier une cause du point d'encombrement (3) sur la base des données reçues à partir du système de suivi (120) ; dans lequel le système de planification (100) est configuré pour estimer une durée pour résoudre l'encombrement au point d'encombrement (3) sur la base de la cause du point d'encombrement ; et dans lequel la période de temps est sur la base de la durée estimée pour résoudre l'encombrement.

5. Système d'embarquement selon la revendication 4, dans lequel le système de planification (100) est configuré pour déterminer une activité qui est effectuée par un ou plusieurs passagers (1) associés au point d'encombrement ; et dans lequel la cause du point d'encombrement est déterminée sur la base de l'activité déterminée.

6. Système d'embarquement selon l'une quelconque revendication précédente, dans lequel le système de planification (100) est configuré pour :
commander l'accès des passagers à la porte d'embarquement (12) en affichant au moins une partie de l'horaire d'embarquement (112) sur un ou plusieurs écrans de porte d'embarquement (16) ; et/ou
commander l'accès de passager à la porte d'embarquement (12) en communiquant un horaire d'embarquement personnalisé à un dispositif mobile (6) d'un ou plusieurs passagers (1) parmi la pluralité de passagers.

7. Système d'embarquement selon l'une quelconque revendication précédente, dans lequel le système de planification (100) est configuré pour :
prédire un futur point d'encombrement (3) le long d'un chemin d'embarquement prévu (5) d'un passager (1) sur la base de données reçues à partir du système de suivi (120) ; et
modifier l'horaire d'embarquement (112) en réponse à l'identification du futur point d'encombrement (3).

8. Système d'embarquement selon l'une quelconque revendication précédente, dans lequel la pluralité de dispositifs de surveillance (122) comprennent une pluralité de caméras ; de préférence, dans lequel la pluralité de caméras comprennent une pluralité de caméras vidéo et/ou une pluralité de caméras infrarouges.

9. Procédé mis en œuvre par ordinateur permettant d'embarquer une pluralité de passagers (1a-c) à bord d'un aéronef (10), chaque passager ayant un siège attribué (4a-c) à bord de l'aéronef, le procédé comprenant :
la commande de l'accès de chacun de la pluralité de passagers (1a-c) à une porte d'embarquement (12) conformément à un horaire d'embarquement (112) à l'aide d'un système de planification (100) ;
la surveillance du comportement de chacun de la pluralité de passagers (1a-c) lorsqu'ils se déplacent le long d'un chemin d'embarquement (2a-c) respectif à l'aide d'un système de suivi (120) comprenant une pluralité de dispositifs de surveillance (122), chaque chemin d'embarquement s'étendant entre la porte d'embarquement (12) et le siège attribué (4a-c) du passager (1a-c) respectif ; et
la modification de l'horaire d'embarquement (112) en réponse à l'identification d'un point d'encombrement (3) le long d'un chemin d'embarquement prévu (5) d'un passager (1) sur la base de données reçues à partir du système de suivi (120).

10. Procédé mis en œuvre par ordinateur selon la revendication 9, le procédé comprenant :
l'identification d'un ou plusieurs passagers (1) qui ont un chemin d'embarquement prévu (5) qui passe par le point d'encombrement (3) ; et
en réponse, la proposition d'un chemin d'embarquement alternatif pour chacun du ou des passagers identifiés (1) et la notification au ou aux passagers identifiés de leur chemin d'embarquement alternatif proposé.

11. Procédé mis en œuvre par ordinateur selon la revendication 9 ou la revendication 10, le procédé comprenant :
l'identification d'un ou plusieurs passagers (1) parmi la pluralité de passagers (1a-c) qui n'ont pas encore été autorisés à accéder à la porte d'embarquement (12) et qui ont un chemin d'embarquement prévu (5) qui ne passe pas par le point d'encombrement (3) ; et
en réponse, l'ajustement de l'horaire d'embarquement (112) afin de donner la priorité à l'octroi de l'accès au ou aux passagers identifiés.

12. Procédé mis en œuvre par ordinateur selon l'une quelconque des revendications 9 à 11, le procédé comprenant :
l'identification d'un ou plusieurs passagers (1) parmi la pluralité de passagers (1a-c) qui n'ont pas encore été autorisés à accéder à la porte d'embarquement (12) et qui ont un chemin d'embarquement prévu (5) qui passe par le point d'encombrement (3) ; et
en réponse, l'ajustement de l'horaire d'embarquement (112) afin de suspendre l'octroi de l'accès au ou aux passagers identifiés pour une période de temps.

13. Procédé mis en œuvre par ordinateur selon la revendication 12, le procédé comprenant :
l'identification d'une cause du point d'encombrement (3) sur la base des données reçues à partir du système de suivi (120) ; et
l'estimation d'une durée pour résoudre l'encombrement au point d'encombrement (3) sur la base de la cause du point d'encombrement ;
dans lequel la période de temps est sur la base de la durée estimée pour résoudre l'encombrement ; de préférence, dans lequel l'identification d'une cause du point d'encombrement comprend la détermination d'une activité qui est effectuée par un ou plusieurs passagers (1) associés au point d'encombrement ; et dans lequel la cause du point d'encombrement est déterminée sur la base de l'activité déterminée.

14. Procédé mis en œuvre par ordinateur selon l'une quelconque des revendications 9 à 13, le procédé comprenant :
la commande de l'accès des passagers à la porte d'embarquement (12) en affichant au moins une partie de l'horaire d'embarquement (112) sur un ou plusieurs écrans de porte d'embarquement (16) ; et/ou
la commande de l'accès de passager à la porte d'embarquement (12) en communiquant un horaire d'embarquement personnalisé à un dispositif mobile (6) d'un ou plusieurs passagers (1) parmi la pluralité de passagers.

15. Procédé mis en œuvre par ordinateur selon l'une quelconque des revendications 9 à 14, le procédé comprenant :
la prédiction d'un futur point d'encombrement (3) le long d'un chemin d'embarquement prévu (5) d'un passager (1) sur la base des données reçues à partir du système de suivi (120) ; et
la modification de l'horaire d'embarquement (112) en réponse à l'identification du futur point d'encombrement (3).
